# EUROPEAN PATENT SPECIFICATION

(11) **EP 4 435 955 B1**
(45) Date of publication and mention of the grant of the patent: **04.11.2026**
(21) Application number: 23891744.7
(22) Date of filing: 10.07.2023
(51) Int. Cl.: H01M 50/383, H01M 50/24, H01M 50/209, H01M 50/289, H01M 50/249, H01M 50/367, H01M 50/204, H01M 50/30

(54) **BATTERY PACK**
BATTERIEPACK
BLOC-BATTERIE

(30) Priority: 15.11.2022 KR 20220152575
(43) Date of publication of application: 25.09.2024
(73) Proprietor: LG Energy Solution, Ltd., Seoul 07335 (KR)
(72) Inventor: JANG, Sung-Hwan, Daejeon 34122 (KR); SEONG, Jun-Yeob, Daejeon 34122 (KR); PARK, Myung-Ki, Daejeon 34122 (KR); CHI, Ho-June, Daejeon 34122 (KR)
(74) Representative: Plasseraud IP
(86) International application number: PCT/KR2023/009782
(87) International publication number: WO 2024/106670

(56) References cited:
- WO-A1-2022/197143
- JP-A- 2014 149 940
- JP-A- 2022 128 334
- JP-B2- 4 935 802
- KR-A- 20110 042 119
- KR-A- 20210 128 814
- KR-A- 20220 144 714
- US-A1- 2011 200 856
- US-A1- 2022 013 849

## Description

### TECHNICAL FIELD

The present disclosure relates to a battery pack.

The present application claims priority to Korean Patent Application No. 10-2022-0152575 filed on November 15, 2022.

### BACKGROUND ART

Patent documents US 2011/0200856, WO2022/197143, and JP 4 935802 B2 disclose a battery module and a battery pack using the same.

As the demand for portable electronic products such as laptops, video cameras, and mobile phones has rapidly increased and the commercialization of robots, electric vehicles, and the like has begun in earnest, research on high-performance secondary batteries capable of repeated charge/discharge has been actively conducted.

Currently commercialized secondary batteries include nickel cadmium batteries, nickel hydride batteries, nickel zinc batteries, lithium secondary batteries, and the like, and among them, lithium secondary batteries are in the spotlight because they have almost no memory effect compared to nickel-based secondary batteries and thus have advantages of free charge/discharge, very low self-discharge rate, and high energy density.

Such lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte, that is, a battery case.

In general, lithium secondary batteries may be classified into can-type secondary batteries in which electrode assemblies are embedded in a metal can and pouch-type secondary batteries in which electrode assemblies are embedded in a pouch of aluminum laminate sheets, depending on the shape of an exterior material.

Recently, secondary batteries have been widely used for driving or energy storage not only in small devices such as portable electronic devices, but also in medium/large devices such as electric vehicles and energy storage systems (ESSs). These secondary batteries are accommodated together inside a module case in a state where a plurality of them are electrically connected, which may form one battery module. In addition, such a battery module may be connected in plurality to form one battery pack.

However, when a plurality of secondary batteries (battery cells) or a plurality of battery modules are concentrated in a narrow space as described above, they may be vulnerable to thermal events. In particular, when an event such as thermal runaway occurs in any one of the battery cells, high temperature gas, flame, heat, or the like may be generated. If such gas, flame, heat, or the like is transferred to other battery cells included in the same battery module, an explosive chain reaction situation such as thermal propagation may occur. In addition, this chain reaction may cause not only an accident such as fire or explosion in the corresponding battery module, but also fire or explosion in other battery modules.

Moreover, in the case of medium/large-sized battery packs for electric vehicles, a large number of battery cells and battery modules may be included to increase output and/or capacity, thereby further increasing the risk of thermal chain reaction. In addition, in the case of a battery pack mounted on an electric vehicle, there may be a user such as a driver in the vicinity thereof. Therefore, if a thermal event occurring in a specific battery module is not properly controlled and a chain reaction occurs, it may cause not only significant property damage but also loss of life.

### DISCLOSURE

### Technical Problem

The present disclosure is designed to solve the above-described problems and other problems.

Another object of the present disclosure may be to provide a battery pack capable of suppressing heat propagation.

Still another object of the present disclosure may be to provide a battery pack capable of discharging gas or flame caused by a thermal event to the outside.

Still another object of the present disclosure may be to provide a battery pack with improved assemblability or productivity.

### Technical Solution

A battery pack according to the features of claim 1.

In addition, the battery pack may further include a gasket positioned between the first part and the perimeter wall.

In addition, the inner cover may include a guide protruding from the plate toward the outer cover.

In addition, the guide may extend along the perimeter of the plate and be in close contact with the partition wall or the perimeter wall.

In addition, the plate may be positioned lower than the upper end of the partition walls.

In addition, the inner cover may be fitted between the perimeter wall and the partition walls.

In addition, the battery module may include a body including a battery cell and in contact with the plate; and a terminal formed on at least one end of the body, wherein the plurality of holes may include a first hole facing the body; and a second hole having a diameter larger than that of the first hole and facing the terminal.

In addition, the plate may be in close contact with the battery module, and the inner cover may further include a protrusion that protrudes downward from the plate and fixes the position of the battery module.

A vehicle according to the present disclosure for achieving the above-described object includes a battery pack according to the present disclosure.

### Advantageous Effects

According to at least one of the embodiments of the present disclosure, a battery pack capable of suppressing heat propagation may be provided.

According to at least one of the embodiments of the present disclosure, a battery pack capable of discharging gas or flame caused by a thermal event to the outside may be provided.

According to at least one of the embodiments of the present disclosure, a battery pack with improved assemblability or productivity may be provided.

In addition, the present disclosure may have various other effects, which will be described in each embodiment, or descriptions of effects that may be easily understood by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a perspective view schematically showing the configuration of a battery pack according to an embodiment of the present disclosure.
FIG. 2 is an exploded view showing a partial configuration of a battery pack according to an embodiment of the present disclosure.
FIG. 3 is a view showing an inner cover according to an embodiment of the present disclosure.
FIG. 4 is a view schematically showing a partial configuration of a cross-section taken along the cutting line A-A' in FIG. 1.
FIG. 5 is a view of a battery pack according to an embodiment of the present disclosure, as viewed from the right.
FIG. 6 is an exploded perspective view schematically showing a partial configuration of a cross-section taken along the cutting line A-A' in FIG. 1.
FIG. 7 is a view schematically showing the configuration of a cross-section taken along the cutting line B-B' in FIG. 1.
FIG. 8 is a view showing an inner cover of a battery pack according to another embodiment of the present disclosure.
FIG. 9 is a view showing an inner cover of a battery pack according to still another embodiment of the present disclosure.
FIG. 10 is a view showing an inner cover of a battery pack according to still another embodiment of the present disclosure.
FIG. 11 is a view showing an inner cover of a battery pack according to still another embodiment of the present disclosure.
FIG. 12 is a view showing an inner cover of a battery pack according to still another embodiment of the present disclosure.
FIG. 13 is a view schematically showing the configuration of a cross-section taken along the cutting line A-A' in FIG. 1 of a battery pack according to still another embodiment of the present disclosure.
FIG. 14 is a view schematically showing the configuration of a cross-section taken along the cutting line A-A' in FIG. 1 of a battery pack according to still another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

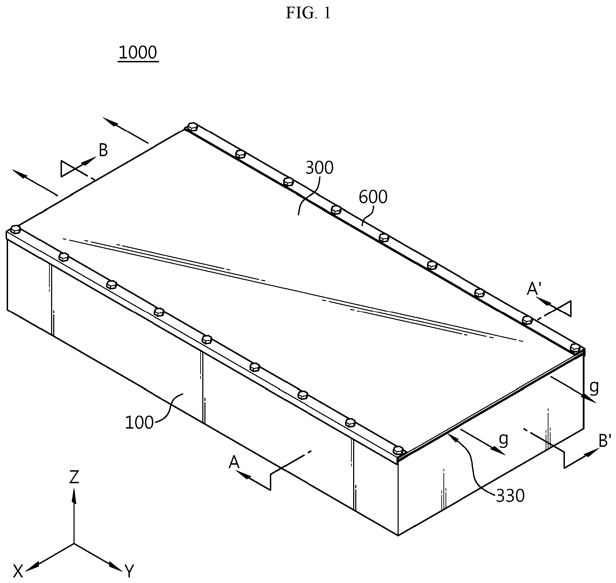

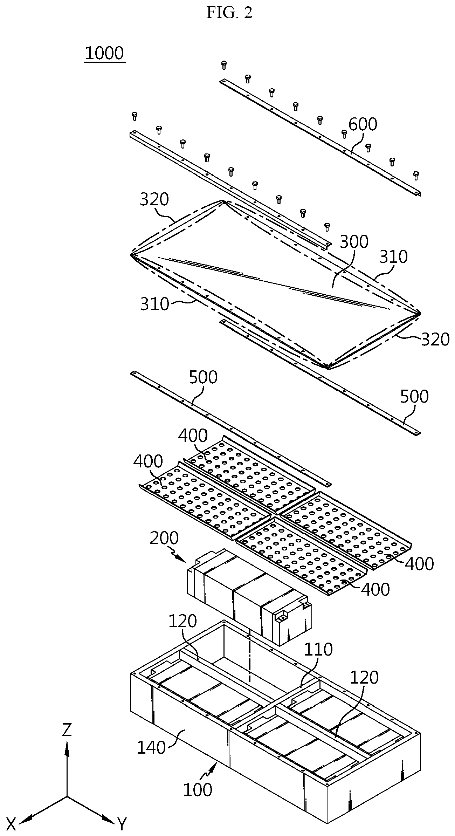

FIG. 1 is a perspective view schematically showing the configuration of a battery pack 1000 according to an embodiment of the present disclosure. FIG. 2 is an exploded view showing a partial configuration of a battery pack 1000 according to an embodiment of the present disclosure.

Referring to FIGS. 1 and 2, a battery pack 1000 according to an embodiment of the present disclosure may include a case 100, a battery module 200, an outer cover 300, and an inner cover 400.

The case 100 provides an interior space. The case 100 may be configured to cover at least a portion of the exterior of the battery module 200. In addition, the case 100 defines an interior space and accommodate the battery module 200 in the interior space. A pack terminal may be provided on at least one side of the case 100. The pack terminal may function as a terminal capable of exchanging power with an external charging or discharging device for the battery pack 1000. The case 100 may have a rectangular parallelepiped shape in which at least a portion of the upper portion is open.

The battery module 200 is accommodated in the interior space provided by the case 100. The battery module 200 may be configured to store and release energy by including one or more battery cells. Here, each battery cell may mean a secondary battery. In addition, a plurality of battery modules 200 may be included in the battery pack 1000. In particular, to improve the capacity and/or output of the battery pack 1000, the battery module 200 may be configured to be included in plurality in the battery pack 1000, as shown in FIG. 2. In this case, a plurality of battery modules 200 may be stacked in at least one direction. For example, referring to FIG. 2, four battery modules 200 are shown disposed in the X-axis direction and the Y-axis direction.

Here, the battery cell may include an electrode assembly, an electrolyte, and a battery case. In this case, the battery cell may be a pouch-type secondary battery. In addition, another type of a secondary battery, such as a cylindrical battery or a prismatic battery, may be configured to be included in the battery module 200.

The outer cover 300 may be configured to cover the battery module 200. In this case, the outer cover 300 may be configured to cover at least a portion of the interior space provided by the case 100. When the battery pack 1000 includes a plurality of battery modules 200, the outer cover 300 may be configured to cover at least a portion of the plurality of battery modules 200. The outer cover (300) covers an upper side of the plurality of battery modules 200. In addition, the outer cover 300 may have a rectangular plate shape.

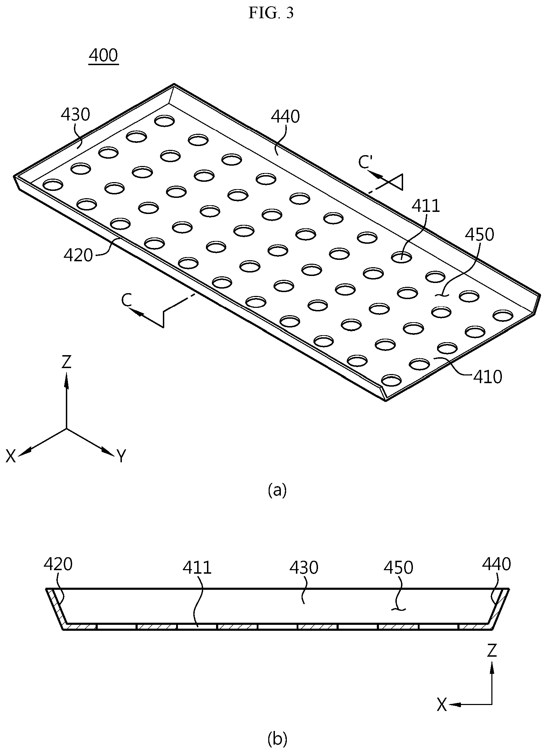

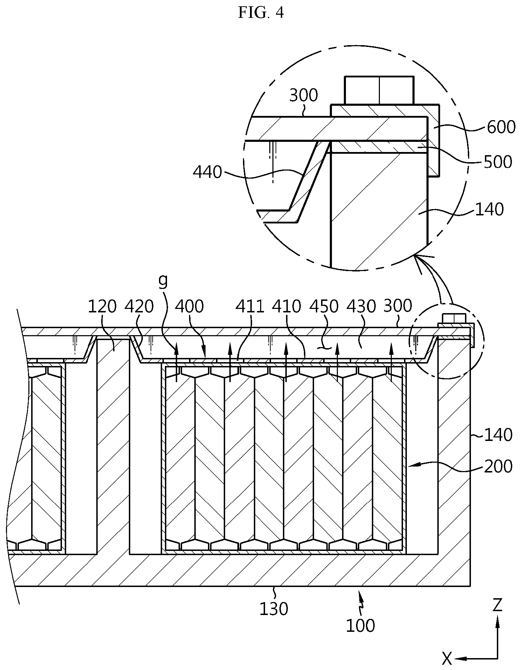

FIG. 3 is a view showing an inner cover 400 according to an embodiment of the present disclosure. In particular, FIG. 3(a) is a perspective view showing a configuration of one inner cover 400, and FIG. 3(b) is a cross-sectional view taken along line C-C' of FIG. 3. FIG. 4 is a view schematically showing a partial configuration of a cross-section taken along the cutting line A-A' in FIG. 1.

Referring to FIGS. 2, 3, and 4, the inner cover 400 may be configured to form a gap 450 between the battery module 200 and the outer cover 300. In this case, the inner cover 400 may be positioned between the battery module 200 and the outer cover 300. The gap 450 may be a space provided by the inner cover. In addition, the gap 450 may be at least a portion of the interior space provided by the case 100. When the battery pack 1000 includes a plurality of battery modules 200, the inner cover 400 may form a gap 450 between each of the plurality of battery modules 200 and the outer cover 300.

The battery pack 1000 includes as many inner covers 400 as the number of a plurality of battery modules 200. In this case, each inner cover 400 may correspond one-to-one with the battery module 200 and cover the upper side of the corresponding battery module 200. For example, as shown in FIG. 2, when the battery pack 1000 includes four battery modules 200, it may also include four inner covers 400, each of which may be positioned on top of the four battery modules 200.

The inner cover 400 may allow the gap 450 to communicate with the exterior of the case 100. That is, the interior space provided by the case 100 may be communicated with the exterior of the case 100 by the inner cover 400. When the inner cover 400 is provided in plurality, the gap 450 formed by each inner cover 400 may communicate with the exterior of the case 100.

According to this configuration of the present disclosure, when a thermal event occurs in any one of the plurality of battery modules 200, the venting gas (g) or flame emitted from the battery module 200 may be discharged to the outside of the case 100 through the gap 450 formed by the inner cover 400. As a result, the thermal event may be prevented from propagating to other battery modules 200 included within the case 100, and thermal safety and thermal stability of the battery pack 1000 may be improved.

Referring to FIG. 2, the battery pack 1000 according to an embodiment of the present disclosure includes partition walls 110, 120 that divide the interior space into a plurality of spaces. In addition, the case 100 includes a base plate 130 and a perimeter wall 140 protruding from the base plate 130.

The base plate 130 may have a rectangular shape. The base plate 130 may have a pair of long edges and a pair of short edges. And the perimeter wall 140 may protrude upward or in the +Z-axis direction from the perimeter of the base plate 130. The perimeter wall may include a pair of long walls and a pair of short walls. The base plate 130 and the perimeter wall 140 may define the interior space. In addition, the base plate 130 and the perimeter wall 140 may form the exterior of the battery pack 1000.

The partition walls 110, 120 may be positioned in the interior space of the case 100 and be provided in plurality. The partition walls 110, 120 may be installed on the base plate 103 or the perimeter wall 140. The partition walls 110, 120 may be configured to divide the interior space in the horizontal or the vertical direction. The battery module 200 may be formed in an accommodation space formed by the perimeter wall 140 and the partition walls 110, 120. The perimeter wall 140 and the partition walls 110, 120 form a plurality of accommodation spaces, the battery module 200 is accommodated in each of the plurality of accommodation spaces.

At least a portion of the inner cover 400 may be accommodated in the accommodation space formed by the perimeter wall 140 and the partition walls 110, 120. The inner cover 400 may be seated on the upper side of the battery module 200. In this case, a portion of the inner cover 400 may be located in the accommodation space, and the remaining portion may be located outside the accommodation space. In addition, when the perimeter wall 140 and the partition walls 110, 120 form a plurality of accommodation spaces, an inner cover 400 may be provided in each of the plurality of accommodation spaces.

According to this configuration of the present disclosure, when a thermal event occurs in any one of the plurality of battery modules 200, the partition walls 110, 120 and the inner cover 400 may physically block the propagation of the thermal event to the adjacent battery module 200. At the same time as the thermal event is physically blocked, the venting gas (g) or flame emitted from the battery module 200 may be discharged to the outside of the case 100 through the gap 450 formed by the inner cover 400, thereby further improving thermal safety and thermal stability of the battery pack 1000.

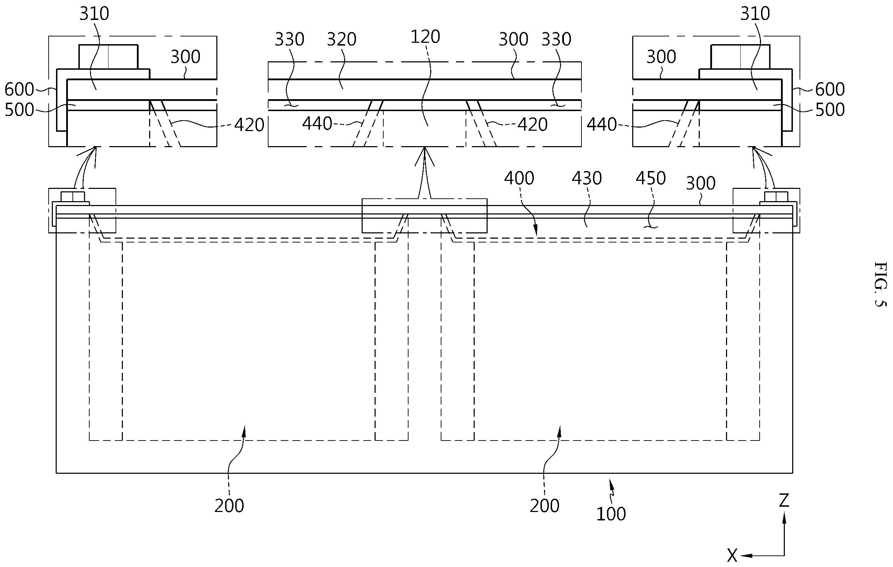

FIG. 5 is a view of a battery pack 1000 according to an embodiment of the present disclosure, as viewed from the right. However, in FIG. 5, for convenience of description, at least a portion of the internal configuration of the battery pack 1000 is illustrated by dotted lines.

Referring to FIGS. 2 and 5, the outer cover 300 of the battery pack 1000 according to an embodiment of the present disclosure includes a first part 310 fastened to the perimeter wall 140. The first part 310 may be a portion of the outer cover 300. For example, the first part 310 may be a long edge area of the outer cover 300. The first part 310 may be fastened to the top of the perimeter wall 140 or the upper surface of the perimeter wall 140 of the perimeter wall 140. For example, the first part 310 and the perimeter wall 140 may be fastened with screws.

In addition, the outer cover 300 includes a second part 320 that forms an opening 330 with the perimeter wall 140. The second part 320 may be a portion of the outer cover 300. For example, the second part 320 may be a short edge area of the outer cover 300. The second part 320 may be located on an end wall of the perimeter wall 140. An opening 330 may be formed between the second part 320 and the end wall of the perimeter wall 140. The opening 330 communicates with the gap 450 formed by the inner cover 400.

According to this configuration of the present disclosure, gas (g) or flame emitted from the battery module 200 due to a thermal event may be discharged to the outside of the battery pack 1000 through the gap 450 and the opening 330.

Referring to FIGS. 2 and 5, the battery pack 1000 according to an embodiment of the present disclosure may further include a gasket 500 positioned between the first part 310 and the perimeter wall 140. The gasket 500 may extend long along the long side of the first part 310 or the outer cover 300. The gasket 500 may be made of a ductile material. For this reason, when the first part 310 of the outer cover 300 and the perimeter wall 140 are screwed together, the gap between the outer cover 300 and the perimeter wall 140 may be sealed. In addition, an opening 330 may be formed between the perimeter wall 140 and the second part 320 due to the thickness of the gasket 500.

According to this configuration of the present disclosure, the gas (g) or flame emitted from the battery module 200 due to a thermal event may not be discharged toward the first part 310 of the outer cover 300 but may be discharged to the opening 330 formed by the second part 320 of the outer cover 300. That is, it is possible to control the discharge direction of the gas (g) or flame emitted from the battery module 200 due to a thermal event.

Referring to FIGS. 3 and 4, the inner cover 400 of the battery pack 1000 according to an embodiment of the present disclosure includes a plate 410 and may include guides 420, 430, 440.

The plate 410 of the inner cover 400 may be configured to be positioned between the battery module 200 and the outer cover 300. The plate 410 may have a rectangular shape. The plate 410 may have a pair of long edges and a pair of short edges. The plate 410 may contact or be in close contact with the top of the battery module 200. And, the plate 410 may cover the top of the battery module 200. Alternatively, the plate 410 may be wider than the top surface of the battery module 200. In addition, the plate 410 may face the outer cover 300.

The guides 420, 430, 440 of the inner cover 400 may be configured to protrude from the plate 410 toward the outer cover 300. Alternatively, the guides 420, 430, 440 may be configured to protrude from the plate 410 upward or in the +Z-axis direction. The guides 420, 430, 440 may contact the outer cover 300. Accordingly, the plate 410 and the guides 420, 430, 440 may form a predetermined space 450 or gap 450 therebetween. Alternatively, a gap 450 may be formed between the plate 410 and the outer cover 300.

According to this configuration of the present disclosure, a gap 450 may be formed between the inner cover 400 and the outer cover 300, and gas (g) or flame emitted from the battery module 200 due to a thermal event may be discharged to the outside of the battery pack 1000 through the gap 450.

The guides 420, 430, 440 of the battery pack 1000 according to an embodiment of the present disclosure may be configured to extend along the perimeter of the plate 410. For example, the guides 420, 430, 440 may extend along a pair of long and short sides of the plate 410. However, the guides 420, 430, 440 extend along a portion of the perimeter of the plate 410, and there may be an unformed portion of the perimeter of the plate 410. For example, the guides 420, 430, 440 may not be formed on a portion of the short side of the plate 410 adjacent to the opening 330, as shown in FIG. 3.

The guides 420, 430, 440 may protrude obliquely from the plate 410. In particular, the guides 420, 430, 440 may be formed to be inclined in a direction away from the plate 410. In this case, since the guides 420, 430, 440 are formed obliquely, the inner cover 400 may be easily seated on the case 100. Alternatively, the guides 420, 430, 440 may have a shape vertically protruding from the plate 410.

The guides 420, 430, 440 may be configured to be in close contact with the partition walls 110, 120 or the perimeter wall 140. The guides 420, 430, 440 extend at least partially along the perimeter of the plate 410 to be in close contact therewith, so that the gap between the inner cover 400 and the partition walls 110, 120 or between the inner cover 400 and the perimeter wall 140 may be sealed.

According to this configuration of the present disclosure, when a thermal event occurs in any one of the plurality of battery modules 200, the guides 420, 430, 440 of the inner cover 400 may block propagation of the gas (g) or flame generated from the battery module 200 to the neighboring battery module 200 beyond the partition walls 110, 120.

Referring to FIG. 4, the battery pack 1000 according to an embodiment of the present disclosure may further include partition walls 110, 120 that divide the interior space into a plurality of spaces, and the plate 410 may be configured to be located lower than the upper ends of the partition walls 110, 120. The plate 410 may be spaced apart from the outer cover 300 by the height of the guides 420, 430, 440. Accordingly, the plate 410 may be positioned lower than the upper ends of the partition walls 110, 120.

According to this configuration of the present disclosure, even if an empty gap occurs between the partition walls 110, 120 and the outer cover 300, the gas (g) or flame generated due to a thermal event may be prevented from leaking into the neighboring battery module 200 beyond the partition walls 110, 120.

Referring to FIG. 4, the inner cover 400 of the battery pack 1000 according to an embodiment of the present disclosure may be configured to be fitted between the perimeter wall 140 and the partition walls 110, 120. In this case, the inner cover 400 may be fixed between the perimeter wall 140 and the partition walls 110, 120. In addition, the gap between the inner cover 400 and the partition walls 110, 120 or between the inner cover 400 and the perimeter wall 140 may be sealed.

Alternatively, the inner cover 400 may be fitted between the perimeter wall 140 and the outer cover 300 and/or between the partition walls 110, 120 and the outer cover 300. For example, in the embodiment of FIG. 4, the upper end of the right guide 440 of the inner cover 400 may be fitted between the gasket 500 located at the upper end of the perimeter wall 140 and the outer cover 300. In addition, in the embodiment of FIG. 4, the upper end of the left guide 420 of the inner cover 400 may be fitted between the partition wall 120 and the outer cover 300.

According to this embodiment of the present disclosure, the coupling and assembly properties of the inner cover 400 may be further improved. In particular, in this case, even if high pressure is applied due to the generation of venting gas or the like, the inner cover 400 may stably maintain its position or shape.

In addition, according to this configuration of the present disclosure, the inner cover 400 may be assembled or fixed to the case 100 without a separate fastening configuration. As a result, the productivity of the battery pack 1000 may be improved.

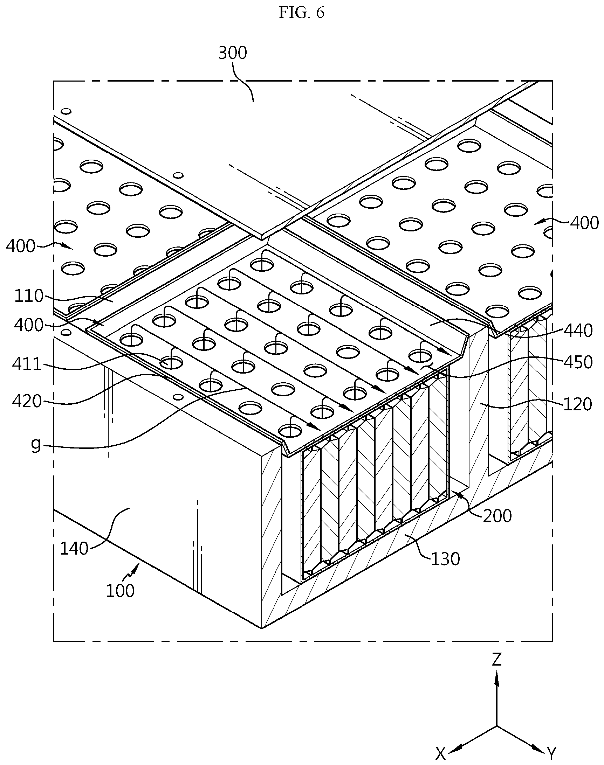

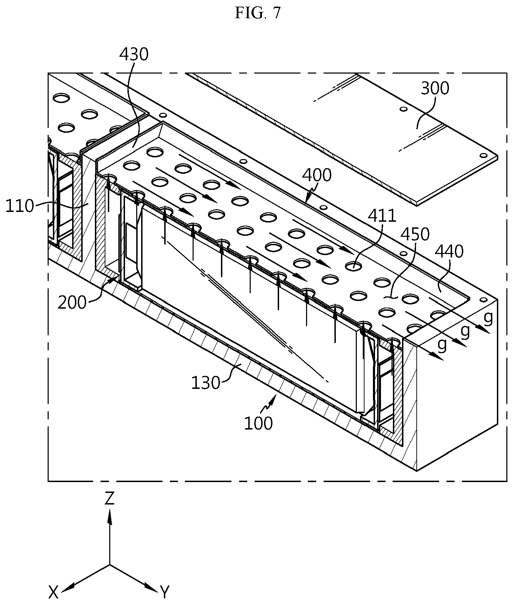

FIG. 6 is an exploded perspective view schematically showing a partial configuration of a cross-section taken along the cutting line A-A' in FIG. 1. FIG. 7 is an exploded perspective view schematically showing a partial configuration of a cross-section taken along the cutting line B-B' in FIG. 1. Referring to FIGS. 3, 6, and 7, the plate 410 of the inner cover 400 according to an embodiment of the present disclosure includes a plurality of holes 411. The plurality of holes 411 may be configured to be disposed along the long side or short side of the plate 410. At least a portion of the plurality of holes 411 may face the battery module 200.

According to this configuration of the present disclosure, the gas (g) or flame generated in the battery module 200 due to the occurrence of a thermal event may flow into the gap 450 formed by the inner cover 400 through the plurality of holes 411. Referring to FIGS. 6 and 7, the gas (g) generated from the battery module may move upward or in the +Z-axis direction. In this case, the gas (g) generated from the battery module may be at high temperature and high pressure, and as a result, the gas (g) or flame introduced through the gap 450 may be discharged to the outside of the battery pack 1000 through the opening 330. At this time, the guides 420, 430, 440 of the inner cover 400 may block the propagation of gas (g) or flame to the neighboring battery module 200.

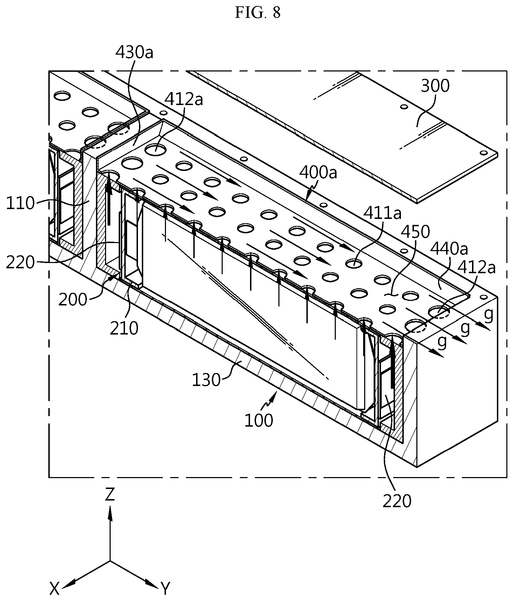

FIG. 8 is a view showing an inner cover 400a according to another embodiment of the present disclosure. Referring to FIG. 8, the battery module 200 of the battery pack 1000 according to another embodiment of the present disclosure may be configured to include a body 210 that includes battery cells and is in contact with the plate 410a. The body 210 may have a rectangular parallelepiped shape and be configured to accommodate battery cells.

The battery module 200 may be configured to include a terminal 220 formed on at least one end of the body 210. This terminal 220 may function as a terminal capable of exchanging power with an external charging or discharging device for the battery module 200.

And the plurality of holes 411a, 412a may be configured to include a first hole 411a facing the body 210 and a second hole 412a having a diameter larger than that of the first hole 411a and facing the terminal 220. The second hole 412a may be formed to correspond to both terminals 220 formed on the body 210, respectively. In this case, the first hole 411a may be located between the plurality of second holes 412a.

According to this configuration of the present disclosure, when a thermal event occurs, the amount of gas (g) or flame emitted from the terminal 220 of the battery module 200 may be greater than the amount thereof emitted from the body 210 of the battery module 200. When the diameter of the second hole 412a facing the terminal 220 is formed to be larger than the diameter of the first hole 411a facing the body 210, the gas (g) or flame may be discharged more smoothly.

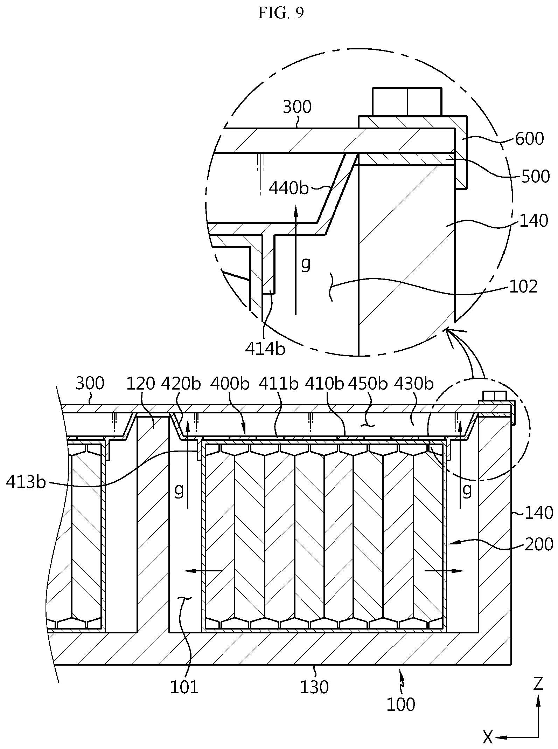

FIG. 9 is a view showing an inner cover 400b of a battery pack 1000 according to still another embodiment of the present disclosure. Referring to FIG. 9, the plate 410b of the battery pack 1000 according to still another embodiment of the present disclosure may be configured to be coupled in close contact with the battery module 200. Moreover, in this embodiment, the plate 410b may be configured to externally surround the upper side perimeter of the battery module 200.

More specifically, the inner cover 400b may further include protrusions 413b, 414b that protrude downward from the plate 410b and fix the position of the battery module 200. Alternatively, the protrusions 413b, 414b may protrude in a direction opposite to the guides 420b, 440b. For example, the guides 420b, 440b may protrude upward from the plate 410b, while the protrusions 413b, 414b may be formed to protrude downward along the perimeter surface of the battery module 200. And, the protrusions 413b, 414b may cover at least a portion of the perimeter surface of the battery module 200. Accordingly, the protrusions 413b, 414b may cover the gap where the battery module 200 and the plate 410b are in close contact.

When a thermal event occurs, gas (g) or flame may be discharged into the interspace 101 between the battery module 200 and the partition wall 120 or the interspace 102 between the battery module 200 and the perimeter wall 140. However, as in the above embodiment of the present disclosure, when the plate 410b is in close contact with the upper surface of the battery module 200 and the protrusions 413b, 414b cover the gap between the battery module 200 and the plate 410b, the discharged gas (g) or flame may be prevented from leaking into the gap between the battery module 200 and the plate 410b and flowing into the interspaces 101, 102. Accordingly, the discharged gas (g) or flame may not spread to other portions of the battery module 200, but may flow directly into the gap 450b formed by the inner cover 400b, thereby improving thermal stability of the battery pack 1000.

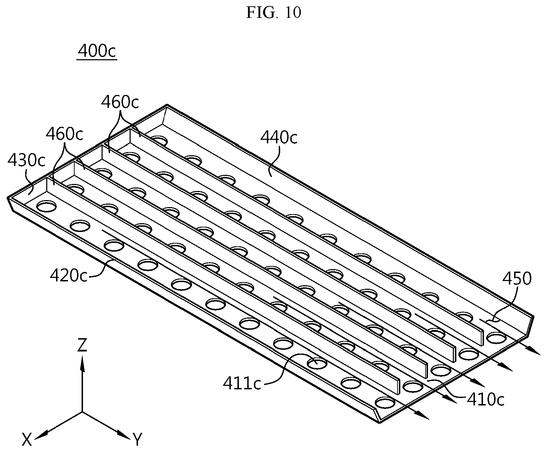

FIG. 10 is a view showing an inner cover 400c of a battery pack 1000 according to still another embodiment of the present disclosure. Referring to FIG. 10, the inner cover 400c may be configured to include a flow guide 460c. The flow guide 460c may extend along the long side or the long side guides 420c, 440c of the plate 410c. One side of the flow guides 460c may be connected to the short side guide 430c. In addition, the flow guide 460c may be formed in plurality. And, the plurality of flow guides 460c may be arranged side by side along the short side or the short side guide 430c of the plate 410c. The flow guide 460c may divide the gap 450 formed by the inner cover 400c into a plurality of flow paths.

In particular, the plurality of flow guides 460c may be arranged in a direction parallel to the stacking direction of the plurality of battery cells included within the battery module 200 located below. For example, if a plurality of battery cells are stacked in the X-axis direction, a plurality of flow guides 460c may also be arranged in the X-axis direction. Moreover, the gap 450 formed by the plurality of flow guides 460c and the long side guides 420c, 440c may be provided to each correspond to one or more battery cells. For example, each gap 450 may be formed to correspond to one or two battery cells.

According to this configuration of the present disclosure, when a thermal event occurs, the gas (g) or flame emitted from the battery module 200 may be discharged to the outside of the battery pack 1000 through the shortest or optimal path by the flow guide 460c.

In addition, according to this configuration of the present disclosure, the gap 450c formed by the inner cover 400c is divided into a plurality of flow paths, so that the gas (g) or flame caused by a thermal event may be suppressed or prevented from being propagated to adjacent flow paths. Moreover, in this case, gas (g) or flame flowing into the gap 450 through a specific hole 411c may be prevented from leaking into the top of another battery cell through another hole 411c. Therefore, in this case, the effect of suppressing heat or flame propagation between a plurality of battery cells sharing one inner cover 400c may be improved.

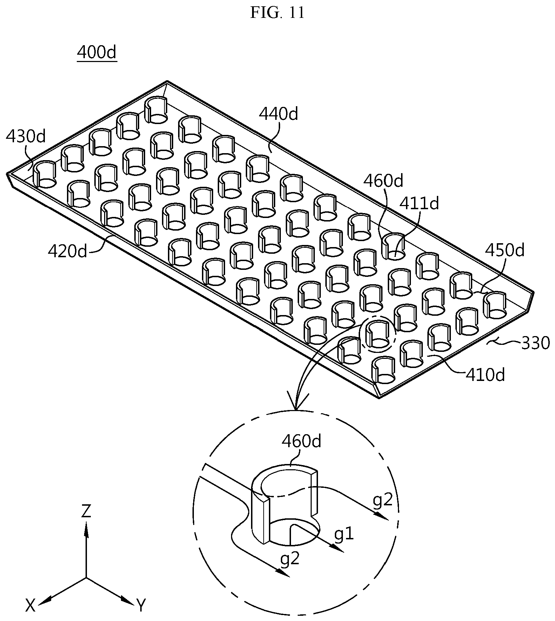

FIG. 11 is a view showing an inner cover 400d of a battery pack 1000 according to still another embodiment of the present disclosure. Referring to FIG. 11, the inner cover 400d may be configured to include a blocking guide 460d. In particular, this blocking guide 460d may be formed in each hole 411d. And, the blocking guide 460d may protrude upward from the perimeter of the hole 411d. The blocking guide 460d may contact or be in close contact with the outer cover 300.

The blocking guide 460d may be formed on a portion of the perimeter of the hole 411d. In particular, the blocking guide 460d may be located on the opposite side of the portion of each hole 411d facing the opening 330.

According to this configuration of the present disclosure, when a thermal event occurs, the backflow of gas (g) or flame emitted from the battery module 200 may be prevented by the blocking guide 460d. That is, the gas (g1) or flame flowing into the inner cover 400 through a specific hole 411d may be easy to move in a direction toward the opening 330. As a result, gas (g) or flame may be discharged to the outside of the battery pack 1000 through the shortest or optimal path.

In addition, according to the above embodiment, in the process of discharging the gas (g1) or flame toward the opening 330, the inflow of the gas (g2) or flame into another hole 411d located in front may be more reliably blocked.

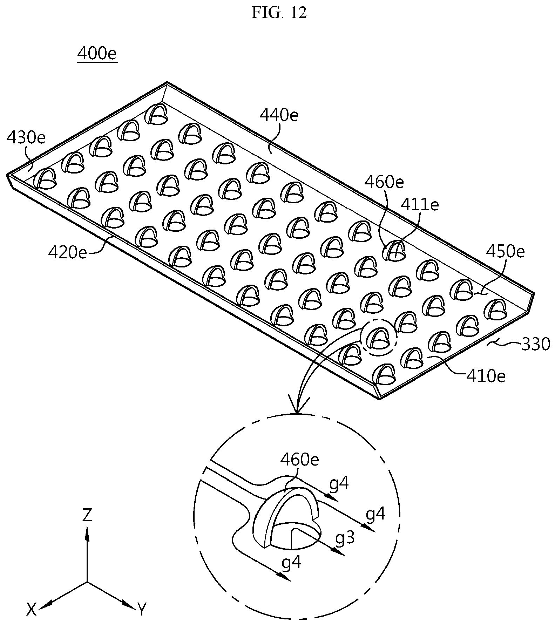

FIG. 12 is a view showing an inner cover 400e of a battery pack 1000 according to still another embodiment of the present disclosure. Referring to FIG. 12, the inner cover 400e may be configured to include a blocking guide 460e. The blocking guide 460e may protrude upward from the perimeter of the hole 411e. The blocking guide 460e may cover at least a portion of the hole 411e. The blocking guide 460e may contact or be in close contact with the outer cover 300.

The blocking guide 460e may be configured to have a shape that is inclined toward the top. Alternatively, the blocking guide 460e may be configured to have a curved shape. Alternatively, the blocking guide 460e may be configured to have a dome shape.

According to this configuration of the present disclosure, when a thermal event occurs, the backflow of gases (g3, g4) or flame emitted from the battery module 200 may be prevented by the blocking guide 460e. As a result, the gases (g3, g4) or flame may be discharged to the outside of the battery pack 1000 through the shortest or optimal path.

In addition, according to this configuration of the present disclosure, the gas (g4) or flame emitted from a specific hole 411e may flow over the blocking guide 460e provided in another hole 411e and be discharged to the outside of the battery pack 1000 through the opening 330. Accordingly, the discharge path of the gas (g4) or flame may be shortened, and the discharge speed of the gas (g4) or flame may be increased.

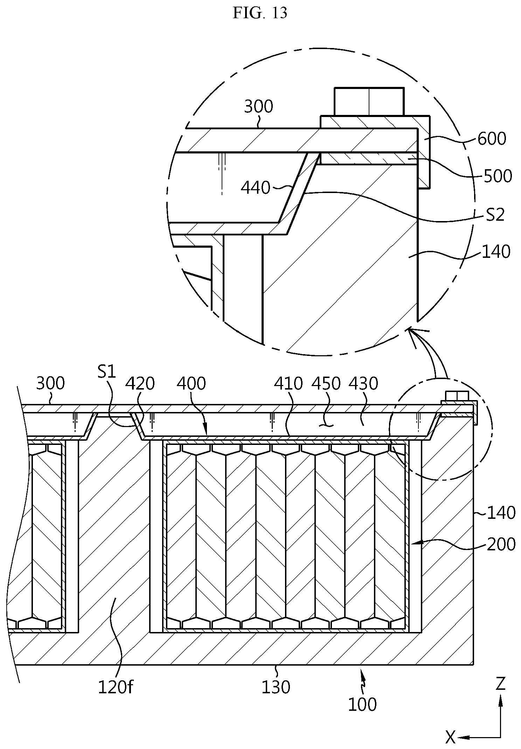

FIG. 13 is a view schematically showing the configuration of a cross-section taken along the cutting line A-A' in FIG. 1 of a battery pack 1000 according to still another embodiment of the present disclosure. Referring to FIG. 13, the partition wall 120f and the perimeter wall 140f may include a groove S1 or a step portion S1. The groove S1 may correspond to the shape of a portion of the inner cover 400 where the plate 410 and the guides 420, 430 are connected. The inner cover 400 may be seated in the groove S1 of the partition wall 120f and the groove S1 of the perimeter wall 140f.

According to this configuration of the present disclosure, the inner cover 400 may be stably supported by the partition wall 120f and the perimeter wall 140f.

In addition, according to this configuration of the present disclosure, the alignment and assembly properties of the inner cover 400 may be improved.

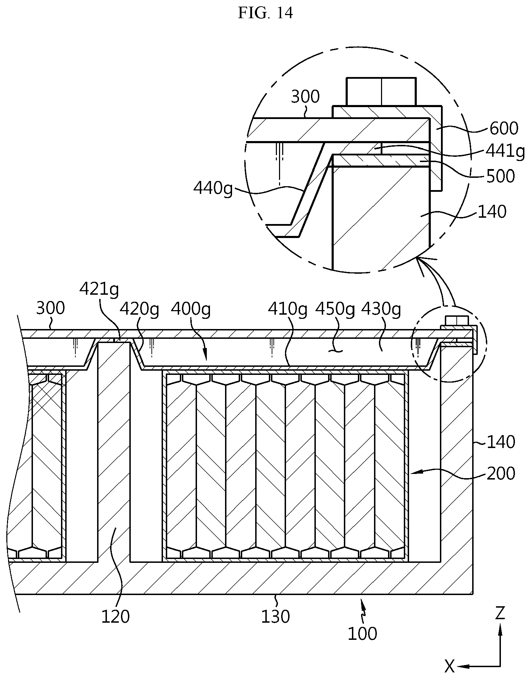

FIG. 14 is a view schematically showing the configuration of a cross-section taken along the cutting line A-A' in FIG. 1 of a battery pack 1000 according to still another embodiment of the present disclosure. Referring to FIG. 14, the inner cover 400g may include seating portions 421g, 441g. The seating portions 421g, 441g may protrude from the guides 420g, 440g toward the outside of the inner cover 400g. The seating portions 421g, 441g may extend along the guides 420g, 440g. The seating portions 421g, 441g may be positioned or fixed between the partition wall 120 and the outer cover 300. In addition, the seating portion 421g may be positioned or fixed between the perimeter wall 140 and the outer cover 300. Alternatively, the seating portion 441g may be positioned or fixed between the gasket 500 and the outer cover 300.

According to this configuration of the present disclosure, the inner cover 400g may be stably supported or fixed by the partition wall 120 and the perimeter wall 140.

In addition, according to this configuration of the present disclosure, the alignment and assembly properties of the inner cover 400g may be improved.

A vehicle V according to the present disclosure may include a battery pack 1000 according to the present disclosure described above. The battery pack 1000 according to the present disclosure may be applied to vehicles such as electric vehicles or hybrid vehicles. Also, the vehicle V according to the present disclosure may further include various other components included in the vehicle V in addition to this battery pack. For example, the vehicle V according to the present disclosure may further include a vehicle body, a motor, a control device such as an electronic control unit (ECU), or the like, in addition to the battery pack 1000 according to the present disclosure.

Meanwhile, the terms indicating directions as used herein such as upper, lower, left, right, front, and rear are used for convenience of description only, and it is obvious to those skilled in the art that the term may change depending on the position of the stated element or an observer.

## Claims

1. A battery pack (1000) comprising:
a case (100) comprising a base plate (130) and a perimeter wall (140) protruding from the base plate (130) and providing an interior space;
partition walls (110, 120) dividing the interior space into a plurality of accommodation spaces;
a battery module (200) accommodated in each accommodation space formed by the perimeter wall (140) and the partition walls (110, 120);
an outer cover (300) covering an upper side of the plurality of battery modules (200);
wherein the outer cover (300) comprises
a first part (310) fastened to the perimeter wall (140); and a second part (320) forming an opening (330) with the perimeter wall (140), wherein the opening (330) communicates with a gap (450); **characterised in that** the battery pack further comprises: an
inner cover (400) for each battery module (200) that forms the gap (450) between the battery module (200) and the outer cover (300) and allows the gap (450) to communicate with the exterior of the case,
wherein the inner cover (400) comprises a plate (410) positioned between the battery module (200) and the outer cover (300);
wherein the plate (410) of the inner cover (400) includes a plurality of holes (411);
wherein at least a portion of the inner cover (400) is accommodated in the accommodation space.

2. The battery pack according to claim 1,
which further comprises a gasket (500) positioned between the first part (310) and the perimeter wall (140).

3. The battery pack according to claim 1,
wherein the inner cover (400) comprises:
a guide (420, 430, 440, 460) protruding from the plate (410) toward the outer cover (300).

4. The battery pack according to claim 3,
wherein the guide (420, 430, 440) extends along the perimeter of the plate (410) and is in close contact with the partition walls (110, 120) or the perimeter wall (140).

5. The battery pack according to claim 1,
wherein the inner cover (400) comprises:
- a guide (420, 430, 440, 460) protruding from the plate (410) toward the outer cover (300),
wherein the plate (410) is positioned lower than the upper end of the partition walls (110, 120).

6. The battery pack according to claim 3,
wherein the plate (410) is positioned lower than the upper end of the partition walls (110, 120), and
wherein the inner cover (400) is fitted between the perimeter wall (140) and the partition walls (110, 120).

7. The battery pack according to claim 3,
wherein the battery module (200) comprises:
a body (210) comprising a battery cell and in contact with the plate (410); and
a terminal (220) formed on at least one end of the body (210), and
wherein the plurality of holes (411) comprise:
a first hole (411a) facing the body (210); and
a second hole (412a) having a diameter larger than that of the first hole (411a) and facing the terminal (220).

8. The battery pack according to claim 3,
wherein the plate (410) is in close contact with the battery module (200), and
the inner cover (400) further comprises a protrusion (413b, 414b) that protrudes downward from the plate (410) and fixes the position of the battery module (200).

9. A vehicle comprising a battery pack (1000) according to any one of claims 1 to 8.

## Patentansprüche

1. Batteriepack (1000), umfassend:
ein Gehäuse (100), das eine Grundplatte (130) und eine Umfangswand (140) umfasst, die von der Grundplatte (130) vorsteht und einen Innenraum bereitstellt;
Trennwände (110, 120), die den Innenraum in eine Vielzahl von Aufnahmeräumen unterteilen;
ein Batteriemodul (200), das in jedem Aufnahmeraum aufgenommen ist, der durch die Umfangswand (140) und die Trennwände (110, 120) gebildet wird;
eine äußere Abdeckung (300), die eine Oberseite der Vielzahl von Batteriemodulen (200) abdeckt;
wobei die äußere Abdeckung (300) Folgendes umfasst:
einen ersten Teil (310), der an der Umfangswand (140) befestigt ist; und einen zweiten Teil (320), der eine Öffnung (330) mit der Umfangswand (140) bildet, wobei die Öffnung (330) mit einem Spalt (450) in Verbindung steht;
**dadurch gekennzeichnet, dass** das Batteriepack ferner umfasst:
eine innere Abdeckung (400) für jedes Batteriemodul (200), die den Spalt (450) zwischen dem Batteriemodul (200) und der äußeren Abdeckung (300) bildet und es dem Spalt (450) ermöglicht, mit der Außenseite des Gehäuses in Verbindung zu stehen,
wobei die innere Abdeckung (400) eine Platte (410) umfasst, die zwischen dem Batteriemodul (200) und der äußeren Abdeckung (300) positioniert ist;
wobei die Platte (410) der inneren Abdeckung (400) eine Vielzahl von Löchern (411) aufweist;
wobei mindestens ein Abschnitt der inneren Abdeckung (400) in dem Aufnahmeraum aufgenommen ist.

2. Batteriepack nach Anspruch 1, das ferner eine Dichtung (500) umfasst, die zwischen dem ersten Teil (310) und der Umfangswand (140) positioniert ist.

3. Batteriepack nach Anspruch 1, wobei die innere Abdeckung (400) umfasst:
eine Führung (420, 430, 440, 460), die von der Platte (410) in Richtung der äußeren Abdeckung (300) vorsteht.

4. Batteriepack nach Anspruch 3, wobei sich die Führung (420, 430, 440) entlang des Umfangs der Platte (410) erstreckt und in engem Kontakt mit den Trennwänden (110, 120) oder der Umfangswand (140) steht.

5. Batteriepack nach Anspruch 1, wobei die innere Abdeckung (400) umfasst:
- eine Führung (420, 430, 440, 460), die von der Platte (410) in Richtung der äußeren Abdeckung (300) vorsteht,
wobei die Platte (410) niedriger als das obere Ende der Trennwände (110, 120) positioniert ist.

6. Batteriepack nach Anspruch 3, wobei die Platte (410) niedriger als das obere Ende der Trennwände (110, 120) positioniert ist, und
wobei die innere Abdeckung (400) zwischen der Umfangswand (140) und den Trennwänden (110, 120) eingepasst ist.

7. Batteriepack nach Anspruch 3, wobei das Batteriemodul (200) umfasst:
einen Körper (210), der eine Batteriezelle umfasst und in Kontakt mit der Platte (410) steht; und
einen Anschluss (220), der an mindestens einem Ende des Körpers (210) ausgebildet ist, und
wobei die Vielzahl von Löchern (411) umfasst:
ein erstes Loch (411a), das dem Körper (210) zugewandt ist; und
ein zweites Loch (412a), das einen größeren Durchmesser als das erste Loch (411a) hat und dem Anschluss (220) zugewandt ist.

8. Batteriepack nach Anspruch 3, wobei die Platte (410) in engem Kontakt mit dem Batteriemodul (200) steht, und die innere Abdeckung (400) ferner einen Vorsprung (413b, 414b) umfasst, der von der Platte (410) nach unten vorsteht und die Position des Batteriemoduls (200) fixiert.

9. Fahrzeug, umfassend ein Batteriepack (1000) nach einem der Ansprüche 1 bis 8.

## Revendications

1. Bloc-batterie (1000) comprenant :
un boîtier (100) comprenant une plaque de base (130) et une paroi périphérique (140) faisant saillie depuis la plaque de base (130) et fournissant un espace intérieur ;
des parois de séparation (110, 120) divisant l'espace intérieur en une pluralité d'espaces de logement ;
un module de batterie (200) logé dans chaque espace de logement formé par la paroi périphérique (140) et les parois de séparation (110, 120) ;
un couvercle externe (300) recouvrant un côté supérieur de la pluralité de modules de batterie (200) ;
dans lequel le couvercle externe (300) comprend
une première partie (310) fixée à la paroi périphérique (140) ; et une seconde partie (320) formant une ouverture (330) avec la paroi périphérique (140), dans lequel l'ouverture (330) communique avec un espace (450) ;
**caractérisé en ce que** le bloc-batterie comprend en outre :
un couvercle interne (400) pour chaque module de batterie (200) qui forme l'espace (450) entre le module de batterie (200) et le couvercle externe (300) et permet à l'espace (450) de communiquer avec l'extérieur du boîtier,
dans lequel le couvercle interne (400) comprend une plaque (410) positionnée entre le module de batterie (200) et le couvercle externe (300) ;
dans lequel la plaque (410) du couvercle interne (400) inclut une pluralité de trous (411) ;
dans lequel au moins une partie du couvercle interne (400) est logée dans l'espace de logement.

2. Le bloc-batterie selon la revendication 1, qui comprend en outre un joint d'étanchéité (500) positionné entre la première partie (310) et la paroi périphérique (140).

3. Le bloc-batterie selon la revendication 1,
dans lequel le couvercle interne (400) comprend :
un guide (420, 430, 440, 460) faisant saillie depuis la plaque (410) vers le couvercle externe (300).

4. Le bloc-batterie selon la revendication 3, dans lequel le guide (420, 430, 440) s'étend le long du périmètre de la plaque (410) et est en contact étroit avec les parois de séparation (110, 120) ou la paroi périphérique (140).

5. Le bloc-batterie selon la revendication 1,
dans lequel le couvercle interne (400) comprend :
- un guide (420, 430, 440, 460) faisant saillie depuis la plaque (410) vers le couvercle externe (300),
dans lequel la plaque (410) est positionnée plus bas que l'extrémité supérieure des parois de séparation (110, 120).

6. Le bloc-batterie selon la revendication 3,
dans lequel la plaque (410) est positionnée plus bas que l'extrémité supérieure des parois de séparation (110, 120), et
dans lequel le couvercle interne (400) est monté entre la paroi périphérique (140) et les parois de séparation (110, 120).

7. Le bloc-batterie selon la revendication 3,
dans lequel le module de batterie (200) comprend :
un corps (210) comprenant une cellule de batterie et en contact avec la plaque (410) ; et
une borne (220) formée sur au moins une extrémité du corps (210), et
dans lequel la pluralité de trous (411) comprend :
un premier trou (411a) faisant face au corps (210) ; et
un second trou (412a) ayant un diamètre plus grand que celui du premier trou (411a) et faisant face à la borne (220).

8. Le bloc-batterie selon la revendication 3, dans lequel la plaque (410) est en contact étroit avec le module de batterie (200), et le couvercle interne (400) comprend en outre une saillie (413b, 414b) qui fait saillie vers le bas depuis la plaque (410) et fixe la position du module de batterie (200).

9. Véhicule comprenant un bloc-batterie (1000) selon l'une quelconque des revendications 1 à 8.
